# EUROPEAN PATENT APPLICATION

(11) **EP 4 761 210 A1**
(43) Date of publication of application: **17.06.2026**
(21) Application number: 24892489.6
(22) Date of filing: 03.09.2024
(51) Int. Cl.: H04L 45/00, H04L 45/02

(54) **COMMUNICATION METHOD, ELECTRONIC DEVICE, AND APPARATUS**

(71) Applicant: New H3C Technologies Co., Ltd., Binjiang District Hangzhou Zhejiang 310052 (CN)
(72) Inventor: LIN, Changwang, Beijing, 100102 (CN)
(74) Representative: IPAZ
(86) International application number: PCT/CN2024/116530
(87) International publication number: WO 2026/050892

(57) **Abstract**

The examples of the present disclosure provide a communication method, an electronic device, and an apparatus, which are applied to a first device in a network, the first device being an electronic device supporting SRv6. The aforementioned method includes: obtaining an SRv6 locator of the first device; and sending a first LLDP packet to a second device, wherein the first LLDP packet includes the SRv6 locator of the first device, so that the second device generates a locator route reaching the first device based on the SRv6 locator of the first device. Applying the examples of the present disclosure enables SRv6 information advertisement via a simple routing protocol.

## Description

### TECHNICAL FIELD

The present disclosure relates to the field of communication technology, particularly to a communication method, an electronic device, and an apparatus.

### BACKGROUND

In the scenario of communicating based on Segment Routing over Internet Protocol Version 6, SRv6, technology, pre-advertising SRv6 locators of electronic devices to each other among the electronic devices in a network is necessary. In related arts, the SRv6 locators may be advertised based on Intermediate System to Intermediate System protocol, IS-IS, or Open Shortest Path First version 3, OSPFv3.

However, due to the complexity of IS-IS and OSPFv3 protocols, it is difficult for electronic devices which do not support a complex dynamic routing protocol function, such as hosts or the like, to advertise SRv6 locators through the methods in the above-mentioned related, which makes it difficult for such electronic devices to complete the advertisement of SRv6 locators and to further perform subsequent SRv6 communications.

### SUMMARY

The examples of the present disclosure are to provide a communication method, an electronic device, and an apparatus for advertising SRv6 locators via a simple routing protocol. The specific technical methods are as follows:

In a first aspect, the examples of the present disclosure provide a communication method applied to a first device in a network, the first device being an electronic device supporting Segment Routing, SR, over Internet Protocol Version 6, SRv6, wherein the method includes:
acquiring an SRv6 locator of the first device;
sending a first Link Layer Discovery Protocol, LLDP, packet to a second device, wherein the first LLDP packet includes the SRv6 locator of the first device, so that the second device generates a locator route reaching the first device based on the SRv6 locator of the first device.

In an example of the present disclosure, the method further includes:
receiving a second LLDP packet sent from a third device, wherein the second LLDP packet includes an SRv6 locator of the third device;
generating a locator route reaching the third device based on the SRv6 locator of the third device;
sending a router advertisement message to a dynamic routing protocol neighbor of the first device based on a dynamic routing protocol, wherein the router advertisement message includes the locator route reaching the third device.

In an example of the present disclosure, the second LLDP packet further includes an SRv6 Capability and the method further includes:
determining a maximum Segment Identifier, SID, stack depth supported by the third device based on the SRv6 Capability.

In an example of the present disclosure, the first LLDP packet further includes an SRv6 Capability to enable the second device to determine an SRv6 Capability of the first device; wherein the SRv6 Capability of the first device indicates a maximum SID stack depth supported by the first device.

In an example of the present disclosure, each LLDP packet includes an SRv6 locator Type-Length-value, TLV, structure which is to carry an SRv6 locator of a device.

In an example of the present disclosure, the SRv6 locator TLV structure includes a value field including a locator field, and the locator field is to carry an SRv6 locator of a device;
the value field further includes: a Multi-Topology Identifier, MTID, field, a metric field, an algorithm field, a locator length, Loc Size, field, and a sub-TLV field;
the MTID field carries an MTID, the metric field indicates a path metric of the SRv6 locator, the algorithm field indicates a path computation algorithm used by the device, and the Loc Size field indicates a length of the SRv6 locator;
the sub-TLV includes a first sub-TLV and/or a second sub-TLV, the first sub-TLV carries an End SID, and the End SID refers to an SID pre-allocated by the device under the SRv6 locator; and the second sub-TLV carries an Administrative Tag.

In an example of the present disclosure, each LLDP packet further includes an SRv6 Capability TLV structure which is to carry the SRv6 Capability.

In an example of the present disclosure, the SRv6 Capability TLV structure includes a value field, and the value field includes an optional sub-TLV,
the optional sub-TLV includes a Type field and a Length field, the Type field carries a type of a Maximum SID Stack Depth, MSD, supported by a device, the Length field carries an MSD value indicating a maximum number of SIDs allowed to be carried in a packet generated by the device.

In a second aspect, the examples of the present disclosure provide an electronic device, wherein the electronic device is a device in a network, the device supporting SRv6, and the electronic device includes:
a processor;
a transceiver;
a machine-readable storage medium, wherein the machine-readable storage medium stores machine-executable instructions capable of being executed by the processor; the machine-executable instructions cause the processor to perform following processes:
   acquiring an SRv6 locator of the first device;
   ending a first LLDP packet to a second device, wherein the first LLDP packet includes the SRv6 locator of the first device, so that the second device generates a locator route reaching the first device based on the SRv6 locator of the first device.

In an example of the present disclosure, the machine-executable instructions further cause the processor to perform following processes:
receiving a second LLDP packet sent from a third device, wherein the second LLDP packet includes an SRv6 locator of the third device;
generating a locator route reaching the third device based on the SRv6 locator of the third device;
sending a router advertisement message to a dynamic routing protocol neighbor of the first device based on a dynamic routing protocol, wherein the router advertisement message includes the locator route reaching the third device.

In an example of the present disclosure, the second LLDP packet further includes an SRv6 Capability, and the machine-executable instructions further cause the processor to perform a following process:
determining a maximum Segment Identifier, SID, stack depth supported by the third device based on the SRv6 Capability.

In an example of the present disclosure, the first LLDP packet further includes an SRv6 Capability to enable the second device to determine an SRv6 Capability of the first device; wherein the SRv6 Capability of the first device indicates a maximum SID stack depth supported by the first device.

In an example of the present disclosure, each LLDP packet includes an SRv6 locator Type-Length-value, TLV, structure which is to carry an SRv6 locator of a device.

In an example of the present disclosure, the SRv6 locator TLV structure includes a value field, wherein the value field includes a locator field, and the locator field is to carry an SRv6 locator of a device;
the value field further includes: a Multi-Topology Identifier, MTID, field, a metric field, an algorithm field, a locator length, Loc Size, field, and a sub-TLV field;
the MTID field carries an MTID, the metric field indicates a path metric of the SRv6 locator, the algorithm field indicates a path computation algorithm used by the device, and the Loc Size field indicates a length of the SRv6 locator;
the sub-TLV includes a first sub-TLV and/or a second sub-TLV, the first sub-TLV carries an End SID, and the End SID refers to an SID pre-allocated by the device under the SRv6 locator; and the second sub-TLV carries an Administrative Tag.

In an example of the present disclosure, each LLDP packet further includes an SRv6 Capability TLV structure which is to carry the SRv6 Capability.

In an example of the present disclosure, the SRv6 Capability TLV structure includes a value field, and the value field includes an optional sub-TLV,
the optional sub-TLV includes a Type field and a Length field, the Type field carries a type of a Maximum SID Stack Depth, MSD, supported by the device, the Length field carries an MSD value indicating a maximum number of SIDs allowed to be carried in a packet generated by the device.

In a third aspect, the examples of the present disclosure provide a communication apparatus, applied to a first device in a network, the first device being an electronic device supporting Segment Routing, SR over Internet Protocol Version 6, SRv6, wherein the apparatus includes:
a locator acquiring module, to acquire an SRv6 locator of the first device;
a first packet sending module, to send a first Link Layer Discovery Protocol, LLDP, packet to a second device, wherein the first LLDP packet includes the SRv6 locator of the first device, so that the second device generates a locator route reaching the first device based on the SRv6 locator of the first device.

In an example of the present disclosure, the apparatus further includes:
a packet receiving module, to receive a second LLDP packet sent from a third device, wherein the second LLDP packet includes an SRv6 locator of the third device;
a route generating module, to generate a locator route reaching the third device based on the SRv6 locator of the third device;
a second packet sending module, to send a router advertisement message to a dynamic routing protocol neighbor of the first device based on a dynamic routing protocol, wherein the router advertisement message includes the locator route reaching the third device.

In an example of the present disclosure, the second LLDP packet further includes an SRv6 Capability, and the apparatus further includes:
a maximum Segment Identifier, SID, stack depth determining module, to determine a maximum SID stack depth supported by the third device based on the SRv6 Capability.

In an example of the present disclosure, the first LLDP packet further includes an SRv6 Capability, to enable the second device to determine an SRv6 Capability of the first device, wherein the SRv6 Capability of the first device indicates a maximum SID stack depth supported by the first device.

In an example of the present disclosure, each LLDP packet includes an SRv6 locator Type-Length-value, TLV, structure which is to carry an SRv6 locator of a device.

In an example of the present disclosure, the SRv6 locator TLV structure includes a value field, wherein the value field includes a locator field, and the locator field is to carry an SRv6 locator of a device;
the value field further includes: a Multi-Topology Identifier, MTID, field, a metric field, an algorithm field, a locator length, Loc Size, field, and a sub-TLV field;
the MTID field carries an MTID, the metric field indicates a path metric of the SRv6 locator, the algorithm field indicates a path computation algorithm used by the device, and the Loc Size field indicates a length of the SRv6 locator;
the sub-TLV includes a first sub-TLV and/or a second sub-TLV, the first sub-TLV carries an End SID, and the End SID refers to an SID pre-allocated by the device under the SRv6 locator; and the second sub-TLV carries an Administrative Tag.

In an example of the present disclosure, each LLDP packet further includes an SRv6 Capability TLV structure which is to carry the SRv6 Capability TLV.

In an example of the present disclosure, the SRv6 Capability TLV structure includes a value field, and the value field includes an optional sub-TLV,
the optional sub-TLV includes a Type field and a Length field, the Type field carries a type of a Maximum SID Stack Depth, MSD, supported by a device, the Length field carries an MSD value indicating a maximum number of SIDs allowed to be carried in a packet generated by the device.

In a fourth aspect, the examples of the present disclosure provide a machine-readable storage medium having stored machine-executable instructions thereon that, when called and executed by a processor, cause the processor to perform any method described in the first aspect.

In a fifth aspect, the examples of the present disclosure provide a computer program product, wherein the product includes instructions that, when executed by a processor, cause the processor to perform any method described in the first aspect.

Advantages of the examples of the disclosure are as follows:
in the examples of the present disclosure, the first device advertises the SRv6 locator to the second device via the first LLDP packet, enabling the second device to generate a locator route reaching the first device based on the SRv6 locator of the first device. Since the first LLDP packet is a packet sent based on the LLDP protocol, and the complexity of the LLDP protocol is relatively low, most electronic devices, even those that do not support a complex dynamic routing protocol function, are configured with the LLDP protocol and may send LLDP packets based on the LLDP protocol. Therefore, the methods provided by the examples of the present disclosure may complete the advertisement of SRv6 locators via LLDP packets, enabling the first device to perform SRv6 communication after advertising the SRv6 locator.

### BRIEF DESCRIPTION OF THE DRAWINGS

To more clearly illustrate the technical methods in the examples of the present disclosure or in the existing technology, the drawings required for describing the examples or the existing technology will be briefly introduced below. It is evident that the drawings described below are merely some examples of the present disclosure. For those skilled in the art, other examples may be derived from these drawings without creative efforts.
FIG. 1 is a schematic diagram of an application scenario provided by an example of the present disclosure.
FIG. 2 is a schematic diagram of a first communication method provided by an example of the present disclosure.
FIG. 3 is a schematic diagram of a second communication method provided by an example of the present disclosure.
FIG. 4 is a schematic diagram of a third communication method provided by an example of the present disclosure.
FIG. 5 is a schematic diagram of an SRv6 locator Type-Length-value, TLV, provided by an example of the present disclosure.
FIG. 6 is a schematic diagram of a second sub-TLV provided by an example of the present disclosure.
FIG. 7 is a schematic diagram of an SRv6 Capability TLV provided by an example of the present disclosure.
FIG. 8 is a schematic diagram of a third sub-TLV provided by an example of the present disclosure.
FIG. 9 is a schematic diagram of an LLDP packet provided by an example of the present disclosure.
FIG. 10 is a schematic structure diagram of an electronic device provided by an example of the present disclosure.
FIG. 11 is a schematic structure diagram of a communication apparatus provided by an example of the present disclosure.

### DETAILED DESCRIPTION

The following will describe the technical methods in the examples of the present disclosure in a clear and complete manner by combining the drawings in the examples of the present disclosure. It is evident that the described examples are merely a part of the examples of the present disclosure, not all of them. Based on the examples in the present disclosure, all other examples obtained by those skilled in the art without creative efforts fall within the protection scope of the present disclosure.

To describe the problems in the related arts, an application scenario of the examples of the present disclosure is described as follows.

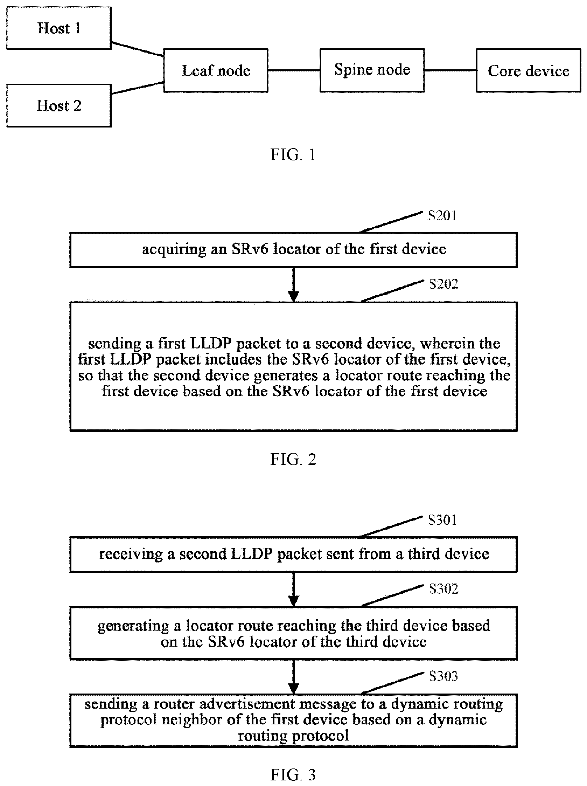

Referring to FIG. 1, which is a schematic diagram of an application scenario provided by an example of the present disclosure.

The schematic diagram includes a host 1, a host 2, a leaf node, a spine node and a core device. The leaf node and spine node in the schematic diagram form a spine-leaf network structure.

In response to determining that the host 1 and the host 2 in the diagram use dynamic routing protocols such as Interior Gateway Protocol, IGP, or Border Gateway Protocol, BGP, etc. to advertise SRv6 locators, it is necessary to configure IGP or BGP on the host 1 and the host 2. However, dynamic routing protocols such as IGP and BGP. etc., are complex, and the host 1 and the host 2 do not support SRv6 locator advertisement based on dynamic routing protocols, which would make it difficult for the host 1 and the host 2 to perform subsequent SRv6 communications.

Other devices besides the host 1 and the host 2 in FIG. 1 may support complex dynamic routing protocols, so these other devices may advertise SRv6 locators based on IGP or BGP.

However, it should be noted that since electronic devices supporting complex dynamic routing protocols may also support simple routing protocols in theory, therefore all types of electronic devices (such as all electronic devices in FIG. 1) may advertise SRv6 locators through the method provided by the examples of the present disclosure, in theory.

Besides, in a network, all devices may adopt the method provided by the examples of the present disclosure for SRv6 locator advertisement. For example, all devices in FIG. 1 may adopt the method provided by the examples of the present disclosure for SRv6 locator advertisement. In some examples, only some devices may adopt the method provided by the examples of the present disclosure for SRv6 locator advertisement, while the other devices may use other methods for SRv6 locator advertisement. For example, the host 1 and the host 2 in FIG. 1 may adopt the method provided by the examples of the present disclosure for SRv6 locator advertisement, while the other devices may use dynamic routing protocols such as IGP or BGP for SRv6 locator advertisement.

Furthermore, the examples of the present disclosure are applicable to electronic devices in various network structures, including ring topology structure, the spine-leaf network structure shown in FIG. 1, and other network structures.

Next, the communication method provided by the examples of the present disclosure will be introduced.

Referring to FIG. 2, which is a schematic diagram of a first communication method provided by an example of the present disclosure, applied to a first device in a network, the first device being an electronic device supporting SRv6, the method includes the following processes S201-S202. Before executing processes S201-S202, the first device first enables LLDP so that the first device may send a LLDP packet in the subsequent processes.

S201: acquiring an SRv6 locator of the first device.

S202: sending a first LLDP packet to a second device, wherein the first LLDP packet includes the SRv6 locator of the first device, so that the second device generates a locator route reaching the first device based on the SRv6 locator of the first device.

Since the first LLDP packet includes the SRv6 locator of the first device, the second device may learn the SRv6 locator of the first device.

From the above, it may be seen that, in the example of the present disclosure, the first device advertises the SRv6 locator to the second device via the first LLDP packet, enabling the second device to generate a locator route reaching the first device based on the SRv6 locator of the first device. Since the first LLDP packet is a packet sent based on the LLDP protocol, and the complexity of the LLDP protocol is relatively low, most electronic devices, even those which do not support a complex dynamic routing protocol function, are configured with the LLDP protocol and may send LLDP packets based on the LLDP protocol. Therefore, the method provided by the example of the present disclosure may complete the advertisement of an SRv6 locators via a LLDP packet, enabling the first device to perform SRv6 communication after advertising the SRv6 locator.

Referencing FIG. 3, which is a schematic diagram of a second communication method provided by an example of the present disclosure, the following processes S301-S303 are included.

S301: receiving a second LLDP packet sent from a third device.

Wherein, the second LLDP packet includes an SRv6 locator of the third device.

S302: generating a locator route reaching the third device based on the SRv6 locator of the third device.

In detail, in addition to performing the aforementioned processes S201-S202, the first device will also receive the second LLDP packet sent by the third device and generate a locator route reaching the third device.

S303: sending a router advertisement message to a dynamic routing protocol neighbor of the first device based on a dynamic routing protocol.

Wherein, the router advertisement message includes the locator route reaching the third device.

In detail, in response to determining that the first device supports a dynamic routing protocol, process S303 of sending a router advertisement message to the dynamic routing protocol neighbor of the first device may be performed after generating the locator route reaching the third device, enabling the dynamic routing protocol neighbor to also generate a locator route reaching the third device. The dynamic routing protocol neighbor also supports the dynamic routing protocol.

Taking the network structure shown in FIG. 1 as an example, assume that the first device is a spine node and the third device is a core device. After the spine node receives the second LLDP packet sent by the core device and generates a locator route reaching the core device, the spine node sends a router advertisement message to a leaf node that is the dynamic routing protocol neighbor.

In some examples, assume that the first device is a leaf node and the third device is a host 1 or host 2 (collectively referred to as a host here). After the leaf node receives the second LLDP packet sent by the host and generates a locator route reaching the host, the leaf node sends a router advertisement message to a spine node that is the dynamic routing protocol neighbor.

In addition, in response to determining the first device does not support a dynamic routing protocol, process S303 may not be performed, and instead, the locator route reaching the third device which is learned by the first device, is advertised to other devices via the LLDP packet provided by the example of the present disclosure.

As may be seen from the above, in the method provided by the example of the present disclosure, the first device not only may advertise its own SRv6 locator to the second device via the first LLDP packet, but also may receive the second LLDP packet sent by the third device and generate a locator route reaching the third device. That is, the first device may complete bidirectional SRv6 locator interaction with other devices via LLDP packets.

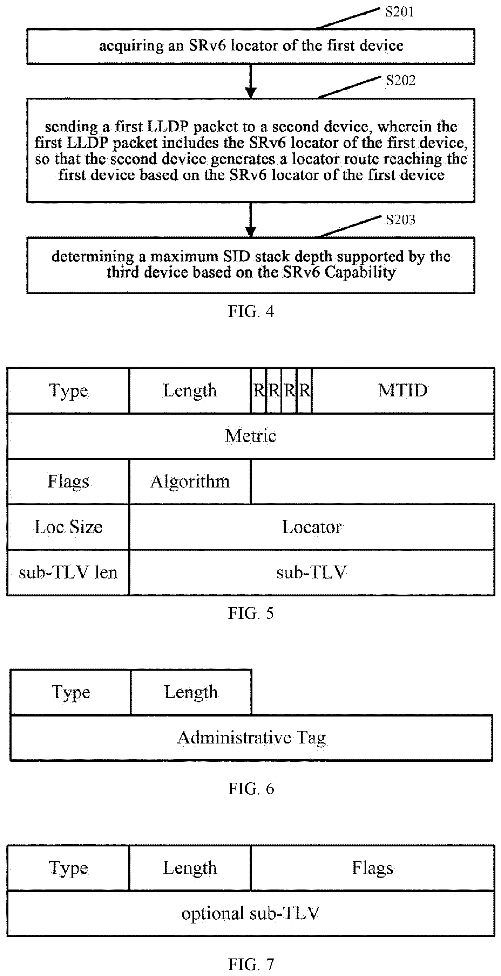

Referencing FIG. 4, which is a schematic diagram of a third communication method provided by an example of the present disclosure, compared with the example shown in the aforementioned FIG. 2, the second LLDP packet also includes SRv6 Capability, which is to inform the receiving end of a maximum Segment Identifier, SID, stack depth supported by a sending end. The method also includes the following process S203.

S203: determining a maximum SID stack depth supported by the third device based on the SRv6 Capability.

In detail, the SRv6 Capability includes the maximum SID stack depth supported by the third device. Besides, the SRv6 Capability may also include other information indicating the capability of the third device to process SRv6 packets. For specific details, refer to the definition of SRv6 Capability in related technologies, which will not be repeated here.

In addition, it should be noted that the third device may include the SRv6 Capability together with the SRv6 locator in the second LLDP packet for synchronous transmission, or may send the SRv6 Capability to the first device via a third LLDP packet, which is different from the second LLDP packet.

As may be seen from the above, in the method provided by the example of the present disclosure, the second LLDP packet sent by the third device to the first device may also include the SRv6 Capability TLV, enabling the first device to determine the maximum SID stack depth supported by the third device. That is, in the example of the present disclosure, an electronic device may not only transmit a SRv6 locator via a simple LLDP packet, but also realize the transmission of SRv6 Capability.

In an example, in the application scenario shown in FIG. 1, host 1 sends a first LLDP packet to a leaf node by adopting the method provided by the present disclosure, and the leaf node generates a locator route reaching host 1. The leaf node sends a router advertisement message to the spine node, and the spine node generates a locator route reaching host 1. After that, the spine node may also send a router advertisement message to the core device, and the core device generates a locator route reaching host 1.

On this basis, host 1 sends an SRv6 locator of FC00:0:11::/48 to the leaf node via an LLDP packet and advertises the SRv6 Capability.

Host 2 sends an SRv6 locator of FC00:0:12::/48 to the leaf node via an LLDP packet and advertises the SRv6 Capability.

The leaf node generates a locator route of FC00:0:11::/48 reaching host 1 and a locator route of FC00:0:12::/48 reaching host 2 via LLDP, and determines the maximum SID stack depths supported by host 1 and host 2.

The leaf node sends the locator routes of host 1 and host 2 generated via LLDP, as well as the maximum SID stack depths supported by host 1 and host 2, to the spine node via IGP or BGP.

The spine node generates the locator routes reaching host 1 and host 2 via IGP or BGP and determines the maximum SID stack depths supported by host 1 and host 2.

The spine node sends the locator routes of host 1 and host 2 generated via IGP or BGP, as well as the maximum SID stack depths supported by host 1 and host 2, to the core device via IGP or BGP.

The core device generates the locator routes reaching host 1 and host 2 via IGP or BGP and determines the maximum SID stack depths supported by host 1 and host 2.

This process is only the unidirectional route generation process from host 1 and host 2 to the core device, and the route generation process from the core device to host 1 and host 2 will not be repeated here.

In an example of the present disclosure, the aforementioned first LLDP packet further includes SRv6 Capability, which is to enable the second device to determine the SRv6 Capability of the first device, wherein the SRv6 Capability indicates the maximum SID stack depth supported by the aforementioned first device.

Similar to the carrying of SRv6 Capability in the aforementioned second LLDP packet, the first LLDP packet sent by the first device to the second device may also carry SRv6 Capability. In addition, the SRv6 Capability sent by the first device to the second device may be included together with the SRv6 locator in the first LLDP packet, or may be separately included in the fourth LLDP packet.

In an example of the present disclosure, each LLDP packet includes an SRv6 locator TLV structure, which is to carry the SRv6 locator of a device.

In another example of the present disclosure, the aforementioned SRv6 locator TLV structure includes a value field, which includes a locator field to carry the SRv6 locator of the device.

The aforementioned value field further includes a Multi-Topology Identifier, MTID, field, a metric field, an algorithm field, a locator length, Loc Size, field, and a sub-TLV field.

The MTID field carries an MTID, which is to identify different topologies. In a peer-to-peer network, two electronic devices on a link may form an adjacency relationship in response to determining the two electronic devices have the same MTID. The metric field indicates a path metric of the SRv6 locator, the algorithm field indicates a path calculation algorithm used by the device, and the Loc Size field indicates the length of the SRv6 locator.

The sub-TLV includes a first sub-TLV and/or a second sub-TLV. The first sub-TLV carries an End SID, which is a SID pre-allocated by the device under the SRv6 locator. The second sub-TLV carries an Administrative Tag.

In addition, the length of the Type field in the SRv6 locator TLV structure may be a preset fixed length, such as 8 bits, 16 bits, etc.

The length of the Length field in the SRv6 locator TLV structure may be a preset fixed length, such as 8 bits, 16 bits, etc.

The aforementioned SRv6 locator TLV structure may also include an R field, which is a reserved field.

The length of the MTID field may be a preset fixed length, such as 12 bits, 16 bits, etc.

The length of the metric field may be a preset fixed length, such as 32 bits, 48 bits, etc.

The length of the algorithm field may be a preset fixed length, such as 8 bits, 16 bits, etc. Different values of the algorithm field correspond to different algorithms. For example, a value of 0 indicates that the path calculation algorithm is Shortest Path First algorithm, and a value of 1 indicates that the path calculation algorithm is Strict Shortest Path First algorithm, etc.

The length of the Loc Size field may be a preset fixed length, such as 8 bits, 12 bits, etc.

The locator field is of variable length.

The sub-TLV field is of variable length.

Besides, the value field of the SRv6 locator TLV structure may also include one or more of the following fields: an R field, which is a reserved idle field, a flags field, and sub-TLV length, Sub-TLV len, field.

The Flags field may be a reserved field, and the length of the Flags field may be a preset fixed length, such as 8 bits, 12 bits, etc.

The sub-TLV length field records the length of the sub-TLV. The length of the sub-TLV length field may be a preset fixed length, such as 8 bits, 12 bits, etc.

Referring to FIG. 5, which is a schematic diagram of an SRv6 locator TLV structure provided by an example of the present disclosure.

Each rectangle in the figure indicates a field, and the detailed descriptions of the fields may be found in the above, which will not be repeated here.

In addition, the length of the first sub-TLV may be a preset fixed length, such as 32 bits, 48 bits, etc. The value field in the first sub-TLV records the End SID.

The length of the second sub-TLV may be a preset fixed length, such as 32 bits, 48 bits, etc. The value field in the second sub-TLV records the Administrative Tag.

Different routes have different Administrative Tags. During the mutual introduction of cross-domain locator routes, Administrative Tags are set for the locator routes, and then the Administrative Tags are matched in the routing policy to filter out locator routes with repeated Administrative Tags, which may prevent the routing loop issue.

In another example of the present disclosure, the second sub-TLV also includes a Type field and a Length field.

The length of the Type field may be a preset fixed length, such as 8 bits, 12 bits, etc.

The length of the Length field may be a preset fixed length, such as 8 bits, 12 bits, etc.

Referring to FIG. 6, which is a schematic diagram of a second sub-TLV provided by an example of the present disclosure.

Each rectangle in the figure indicates a field, and the detailed descriptions of the fields may be found in the above, which will not be repeated here.

In an example of the present disclosure, each LLDP packet also includes an SRv6 Capability TLV structure, which is to carry the SRv6 Capability.

In an example of the present disclosure, the SRv6 Capability TLV structure includes a value field, which includes an optional sub-TLV.

In addition, the length of the Type field in the SRv6 Capability TLV structure may be a preset fixed length, such as 8 bits, 12 bits, etc.

The length of the Length field in the SRv6 Capability TLV structure may be a preset fixed length, such as 8 bits, 12 bits, etc.

In addition, the aforementioned SRv6 Capability TLV structure may also include a reserved Flags field. In one example, the length of the aforementioned Flags field may be a preset fixed length, such as 8 bits, 12 bits, etc.

Referring to FIG. 7, which is a schematic diagram of an SRv6 Capability TLV provided by an example of the present disclosure.

Each rectangle in the figure indicates a field, and the detailed descriptions of the fields may be found in the above, which will not be repeated here.

The optional sub-TLV includes a Type field and a Length field. The Type field carries the type of Maximum SID Stack Depth, MSD-type, supported by the device, and the Length field carries the MSD value, which indicates the maximum number of SIDs allowed to be carried in a packet generated by the device.

The MSD-type includes:
Maximum Segments Left MSD Type, which indicates the maximum value of the Segment Left, SL, field in the Segment Routing Header, SRH, of the designated received packet before applying the SRv6 Endpoint Function instruction associated with the SID.
Maximum End Pop MSD Type, which indicates the maximum number of SIDs that may be popped by a device supporting Penultimate Segment Pop of the SRH, PSP, or USP (Ultimate Segment Pop of the SRH).
Maximum H.Insert MSD Type, which indicates the maximum number of SIDs allowed to be inserted in response to performing the "H.Insert (header insertion)" operation to insert SRH information. If the value is 0, the device cannot perform the "H.Insert" operation.
Maximum H.Encaps MSD Type, which indicates the maximum number of SIDs that may be encapsulated into the packet.
Maximum End D MSD Type, which indicates the maximum number of SIDs that may be decapsulated by the device.

In a case where there are multiple MSD-Types, each MSD-Type corresponds to an MSD value, which indicates the value of the MSD of this type.

The length of the Type field may be a preset fixed length, such as 8 bits, 12 bits, etc.

The length of the Length field may be a preset fixed length, such as 8 bits, 12 bits, etc.

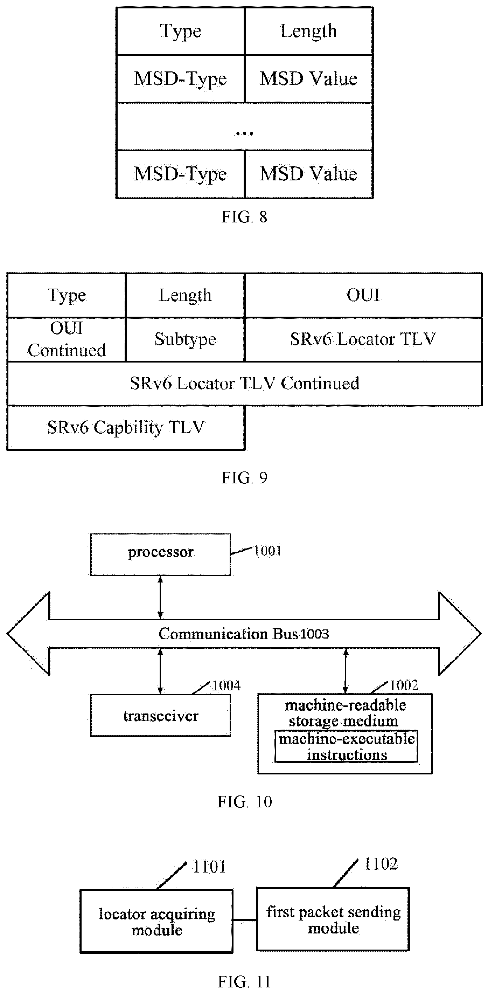

Referring to FIG. 8, which is a schematic diagram of an optional sub-TLV provided in an example of the present disclosure.

Each rectangle in the figure indicates a field, and detailed descriptions of each field may be found in the above, and will not be repeated here. Since the number of MSD-types is not fixed, the number of MSD values and MSD-types is not fixed, so ellipses are used in the figure to indicate them.

In another example of the present disclosure, each LLDP packet further includes a Type field, a Length field, an Organizationally Unique Identifier, OUI, field, and a Subtype field.

The Type field records the type of the LLDP packet, and the length of the Type field may be a preset fixed length, such as 8 bits, 12 bits, etc.

The Length field records the length of the LLDP packet, and the length of the Length field may be a preset fixed length, such as 8 bits, 12 bits, etc.

The OUI field records the OUI of the electronic device that sends the LLDP packet.

The Subtype field indicates the subtype of the LLDP packet, and the length of the Subtype field may be a preset fixed length, such as 8 bits, 12 bits, etc.

Referring to FIG. 9, which is a schematic diagram of an LLDP packet provided in an example of the present disclosure.

The OUI and OUI Continued in the figure together form a complete OUI field, and the SRv6 locator TLV and SRv6 locator TLV Continued together form a complete SRv6 locator TLV structure. Detailed descriptions of each field contained in the figure may be found in the above, and will not be repeated here.

Corresponding to the aforementioned communication method, an example of the present disclosure also provides an electronic device, wherein the electronic device is a device in a network, the device supporting SRv6. As shown in FIG. 10, the electronic device includes:
a processor 1001;
a transceiver 1004;
a machine-readable storage medium 1002, wherein the machine-readable storage medium stores machine-executable instructions capable of being executed by the processor 1001; the machine-executable instructions cause the processor 1001 to perform the following processes:
   acquiring an SRv6 locator of the first device;
   sending a first Link Layer Discovery Protocol, LLDP, packet to a second device, wherein the first LLDP packet includes the SRv6 locator of the first device, so that the second device generates a locator route reaching the first device based on the SRv6 locator of the first device.

As shown in FIG. 10, the network device may further include a communication bus 1003. The processor 1001, the machine-readable storage medium 1002, and the transceiver 1004 communicate with each other through the communication bus 1003, which may be a Peripheral Component Interconnect, PCI, bus or an Extended Industry Standard Architecture, EISA, bus, etc. The communication bus 1003 may be divided into an address bus, a data bus, a control bus, etc.

The transceiver 1004 may be a wireless communication module, and under the control of the processor 1001, the transceiver 1004 performs data interaction with other devices.

The machine-readable storage medium 1002 may include a Random-Access Memory, RAM, or a Non-Volatile Memory, NVM, such as one or more disk storage devices. Besides, the machine-readable storage medium 1002 may also be one or more storage devices located remotely from the processor 1001.

The processor 1001 may be a general-purpose processor, including a Central Processing Unit, CPU, a Network Processor, NP, etc.; the processor 1001 may also be a Digital Signal Processing, DSP, an Application Specific Integrated Circuit, ASIC, a Field-Programmable Gate Array, FPGA, or other programmable logic devices, discrete gates or transistor logic devices, or discrete hardware components.

It may be seen from the above that in the example of the present disclosure, the first device advertises the SRv6 locator to the second device via the first LLDP packet, enabling the second device to generate a locator route reaching the first device based on the SRv6 locator of the first device. Since the first LLDP packet is a packet sent based on the LLDP protocol, and the complexity of the LLDP protocol is relatively low, most electronic devices, even those that do not support a complex dynamic routing protocol function, are configured with the LLDP protocol and may send LLDP packets based on the LLDP protocol. Therefore, the example of the present disclosure may complete the advertisement of SRv6 locators via LLDP packets, enabling the first device to perform SRv6 communication after advertising the SRv6 locator.

In an example of the present disclosure, the machine-executable instructions further cause the processor 1001 to perform the following processes:
receiving a second LLDP packet sent from a third device, wherein the second LLDP packet includes an SRv6 locator of the third device;
generating a locator route reaching the third device based on the SRv6 locator of the third device;
sending a router advertisement message to a dynamic routing protocol neighbor of the first device based on a dynamic routing protocol, wherein the router advertisement message includes the locator route reaching the third device.

It may be seen from the above that in the example of the present disclosure, the first device not only may advertise its own SRv6 locator to the second device via the first LLDP packet, but also may receive the second LLDP packet sent by the third device and generate a locator route reaching the third device. That is, the first device may complete bidirectional SRv6 locator interaction with other devices via LLDP packets.

In an example of the present disclosure, the second LLDP packet further includes SRv6 Capability, and the machine-executable instructions further cause the processor to perform the following process:
determining a maximum SID stack depth supported by the third device based on the SRv6 Capability.

It may be seen from the above that in the example of the present disclosure, the second LLDP packet sent by the third device to the first device may also include the SRv6 Capability, enabling the first device to determine the maximum SID stack depth supported by the third device. That is, in the example of the present disclosure, the electronic device may not only transmit SRv6 locators via simple LLDP packets but also realize the transmission of SRv6 Capability.

In an example of the present disclosure, the first LLDP packet further includes an SRv6 Capability, to enable the second device to determine an SRv6 Capability of the first device, wherein the SRv6 Capability of the first device indicates a maximum SID stack depth supported by the first device.

In an example of the present disclosure, each LLDP packet includes an SRv6 locator TLV structure, wherein the SRv6 locator TLV structure is to carry an SRv6 locator of a device.

In an example of the present disclosure, the SRv6 locator TLV structure includes a value field, wherein the value field includes a locator field, and the locator field is to carry an SRv6 locator of a device;
the value field further includes a MTID field, a metric field, an algorithm field, a Loc Size field, and a sub-TLV field;
the MTID field carries an MTID, the metric field indicates a path metric of the SRv6 locator, the algorithm field indicates a path computation algorithm used by the device, and the Loc Size field indicates a length of the SRv6 locator;
the sub-TLV includes a first sub-TLV and/or a second sub-TLV, the first sub-TLV carries an End SID, and the End SID refers to an SID pre-allocated by the device under the SRv6 locator; and the second sub-TLV carries an Administrative Tag.

In an example of the present disclosure, each LLDP packet further includes an SRv6 Capability TLV structure, wherein the SRv6 Capability TLV structure is to carry the SRv6 Capability.

In an example of the present disclosure, the SRv6 Capability TLV structure includes a value field, and the value field includes an optional sub-TLV,
the optional sub-TLV includes a Type field and a Length field, the Type field carries a type of a Maximum SID Stack Depth, MSD, supported by the device, the Length field carries an MSD value, and the MSD value indicates a maximum number of SIDs allowed to be carried in a packet generated by the device.

Corresponding to the aforementioned communication method, an example of the present disclosure also provides a communication apparatus.

Referring to FIG. 11, which is a schematic structure diagram of a communication apparatus provided in an example of the present disclosure, applied to a first device in a network, the first device being an electronic device supporting SRv6, wherein, the apparatus includes:
a locator acquiring module 1101, to acquire an SRv6 locator of the first device;
a first packet sending module 1102, to send a first LLDP packet to a second device, wherein the first LLDP packet includes the SRv6 locator of the first device, so that the second device generates a locator route reaching the first device based on the SRv6 locator of the first device.

It may be seen from the above that, in the example of the present disclosure, the first device advertises the SRv6 locator to the second device via the first LLDP packet, enabling the second device to generate a locator route reaching the first device based on the SRv6 locator of the first device. Since the first LLDP packet is a packet sent based on the LLDP protocol, and the complexity of the LLDP protocol is relatively low, most electronic devices, even those that do not support a complex dynamic routing protocol function, are configured with the LLDP protocol and may send LLDP packets based on the LLDP protocol. Therefore, the example of the present disclosure may complete the advertisement of SRv6 locators via LLDP packets, enabling the first device to perform SRv6 communication after advertising the SRv6 locator.

In an example of the present disclosure, the apparatus further includes:
a packet receiving module, to receive a second LLDP packet sent from a third device, wherein the second LLDP packet includes an SRv6 locator of the third device;
a route generating module, to generate a locator route reaching the third device based on the SRv6 locator of the third device;
a second packet sending module, to send a router advertisement message to a dynamic routing protocol neighbor of the first device based on a dynamic routing protocol, wherein the router advertisement message includes the locator route reaching the third device.

It may be seen from the above that, in the example of the present disclosure, the first device not only may advertise its own SRv6 locator to the second device via the first LLDP packet, but also may receive the second LLDP packet sent by the third device and generate a locator route reaching the third device. That is, the first device may complete bidirectional SRv6 locator interaction with other devices via LLDP packets.

In an example of the present disclosure, the second LLDP packet further includes an SRv6 Capability, and the apparatus further includes:
a maximum SID stack depth determining module, to determine a maximum SID stack depth supported by the third device based on the SRv6 Capability.

It may be seen from the above that, in the example of the present disclosure, the second LLDP packet sent by the third device to the first device may also include the SRv6 Capability, enabling the first device to determine the maximum SID stack depth supported by the third device. That is, in the example of the present disclosure, the electronic device may not only transmit SRv6 locators via simple LLDP packets but also realize the transmission of SRv6 Capability.

In an example of the present disclosure, the first LLDP packet further includes an SRv6 Capability, to enable the second device to determine an SRv6 Capability of the first device, wherein the SRv6 Capability of the first device indicates a maximum SID stack depth supported by the first device.

In an example of the present disclosure, each LLDP packet includes an SRv6 locator TLV structure, wherein the SRv6 locator TLV structure is to carry an SRv6 locator of a device.

In an example of the present disclosure, the SRv6 locator TLV structure includes a value field, wherein the value field includes a locator field, and the locator field is to carry an SRv6 locator of a device;
the value field further includes: a MTID field, a metric field, an algorithm field, a Loc Size field, and a sub-TLV field;
the MTID field carries an MTID, the metric field indicates a path metric of the SRv6 locator, the algorithm field indicates a path computation algorithm used by the device, and the Loc Size field indicates a length of the SRv6 locator;
the sub-TLV includes a first sub-TLV and/or a second sub-TLV, the first sub-TLV carries an End SID, and the End SID refers to an SID pre-allocated by the device under the SRv6 locator; and the second sub-TLV carries an Administrative Tag.

In an example of the present disclosure, each LLDP packet further includes an SRv6 Capability TLV structure, wherein the SRv6 Capability TLV structure is to carry the SRv6 Capability.

In an example of the present disclosure, the SRv6 Capability TLV structure includes a value field, and the value field includes an optional sub-TLV,
the optional sub-TLV includes a Type field and a Length field, the Type field carries a type of an MSD supported by a device, the Length field carries an MSD value, and the MSD value indicates a maximum number of SIDs allowed to be carried in a packet generated by the device.

Based on the same inventive concept, according to the communication method provided in the examples of the present application, an example of the present disclosure also provides a machine-readable storage medium having stored machine-executable instructions thereon that, when called and executed by a processor, cause the processor to perform any of the communication methods in the above examples.

Another example provided by the present disclosure provides a computer program product including instructions that, when running on a computer, cause the computer to perform any of the communication methods in the above examples.

In the above examples, all or part of the functions may be implemented through software, hardware, firmware, or any combination thereof. In response to determining that the functions are implemented through software, all or part of the functions may be implemented in the form of a computer program product. The computer program product includes one or more computer instructions. In response to determining that the computer instructions are loaded and executed on a computer, all or part of the processes or functions as described in the examples of the present disclosure are generated. The computer may be a general-purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from a website, computer, server, or data center to another website, computer, server, or data center through wired (e.g., coaxial cable, optical fiber, digital subscriber line, DSL) or wireless (e.g., infrared, radio, microwave) means. The computer-readable storage medium may be any available medium that may be accessed by a computer or a data storage device that integrates one or more available media, such as a server or a data center, etc. The available medium may be a magnetic medium (e.g., floppy disk, hard disk, magnetic tape), an optical medium (e.g., DVD), or a semiconductor medium (e.g., solid-state drive, SSD).

It should be noted that, in this document, relational terms such as "first" and "second" are only to distinguish one entity or operation from another entity or operation and do not necessarily require or imply any actual relationship or sequence between these entities or operations. Moreover, terms such as "include" or "contain" or any other variations thereof are intended to cover non-exclusive inclusions, thereby a process, a method, an item, or a device including a series of elements not only includes those elements but also include other elements that are not explicitly listed, or also include elements inherent to the process, the method, the item, or the device. Without further limitations, elements defined by the phrase "including one..." do not exclude the existence of additional identical elements in the processes, methods, items, or devices that include the elements.

Each example in the present specification is described in a related manner, and similar parts among different examples may be referred to each other. Each example focuses on the differences from other examples. Especially, for examples of the electronic device, apparatus, computer-readable storage medium, and computer program product, since they are basically similar to the method examples, the descriptions are relatively simple, and relevant parts may refer to the descriptions of the method examples.

The above description is only preferred examples of the present disclosure and is not intended to limit the protection scope of the present disclosure. Any modifications, equivalent substitutions, or improvements made within the spirit and principle of the present disclosure shall fall within the protection scope of the present disclosure.

## Claims

1. A communication method, applied to a first device in a network, the first device being an electronic device supporting Segment Routing, SR, over Internet Protocol Version 6, SRv6, wherein the method comprises:
acquiring an SRv6 locator of the first device;
sending a first Link Layer Discovery Protocol, LLDP, packet to a second device, wherein the first LLDP packet comprises the SRv6 locator of the first device, so that the second device generates a locator route reaching the first device based on the SRv6 locator of the first device.

2. The method of claim 1, further comprising:
receiving a second LLDP packet sent from a third device, wherein the second LLDP packet comprises an SRv6 locator of the third device;
generating a locator route reaching the third device based on the SRv6 locator of the third device;
sending a router advertisement message to a dynamic routing protocol neighbor of the first device based on a dynamic routing protocol, wherein the router advertisement message comprises the locator route reaching the third device.

3. The method of claim 2, wherein the second LLDP packet further comprises an SRv6 Capability and the method further comprises:
determining a maximum Segment Identifier, SID, stack depth supported by the third device based on the SRv6 Capability.

4. The method of claim 3, wherein the first LLDP packet further comprises an SRv6 Capability to enable the second device to determine an SRv6 Capability of the first device; wherein the SRv6 Capability of the first device indicates a maximum SID stack depth supported by the first device.

5. The method of claim 2, wherein each LLDP packet comprises an SRv6 locator Type-Length-value, TLV, structure which is to carry an SRv6 locator of a device.

6. The method of claim 5, wherein the SRv6 locator TLV structure comprises a value field comprising a locator field, and the locator field is to carry an SRv6 locator of a device;
the value field further comprises: a Multi-Topology Identifier, MTID, field, a metric field, an algorithm field, a locator length, Loc Size, field, and a sub-TLV field;
the MTID field carries an MTID, the metric field indicates a path metric of the SRv6 locator, the algorithm field indicates a path computation algorithm used by the device, and the Loc Size field indicates a length of the SRv6 locator;
the sub-TLV comprises a first sub-TLV and/or a second sub-TLV, the first sub-TLV carries an End SID, and the End SID refers to an SID pre-allocated by the device under the SRv6 locator; and the second sub-TLV carries an Administrative Tag.

7. The method of claim 4, wherein each LLDP packet further comprises an SRv6 Capability TLV structure which is to carry the SRv6 Capability.

8. The method of claim 7, wherein the SRv6 Capability TLV structure comprises a value field, and the value field comprises an optional sub-TLV,
the optional sub-TLV comprises a Type field and a Length field, the Type field carries a type of a Maximum SID Stack Depth, MSD, supported by a device, the Length field carries an MSD value indicating a maximum number of SIDs allowed to be carried in a packet generated by the device.

9. An electronic device, wherein the electronic device is a device in a network, the device supporting Segment Routing, SR, over Internet Protocol Version 6, SRv6, and the electronic device comprises:
a processor;
a transceiver;
a machine-readable storage medium, wherein the machine-readable storage medium stores machine-executable instructions capable of being executed by the processor; the machine-executable instructions cause the processor to perform following processes:
acquiring an SRv6 locator of the first device;
sending a first Link Layer Discovery Protocol, LLDP, packet to a second device, wherein the first LLDP packet comprises the SRv6 locator of the first device, so that the second device generates a locator route reaching the first device based on the SRv6 locator of the first device.

10. The electronic device of claim 9, wherein the machine-executable instructions further cause the processor to perform following processes:
receiving a second LLDP packet sent from a third device, wherein the second LLDP packet comprises an SRv6 locator of the third device;
generating a locator route reaching the third device based on the SRv6 locator of the third device;
sending a router advertisement message to a dynamic routing protocol neighbor of the first device based on a dynamic routing protocol, wherein the router advertisement message comprises the locator route reaching the third device.

11. The electronic device of claim 10, wherein the second LLDP packet further comprises an SRv6 Capability, and the machine-executable instructions further cause the processor to perform a following process:
determining a maximum Segment Identifier, SID, stack depth supported by the third device based on the SRv6 Capability.

12. The electronic device of claim 11, wherein the first LLDP packet further comprises an SRv6 Capability to enable the second device to determine an SRv6 Capability of the first device; wherein the SRv6 Capability of the first device indicates a maximum SID stack depth supported by the first device.

13. The electronic device of claim 10, wherein each LLDP packet comprises an SRv6 locator Type-Length-value, TLV, structure which is to carry an SRv6 locator of a device.

14. The electronic device of claim 13, wherein the SRv6 locator TLV structure comprises a value field, wherein the value field comprises a locator field, and the locator field is to carry an SRv6 locator of a device;
the value field further comprises: a Multi-Topology Identifier, MTID, field, a metric field, an algorithm field, a locator length, Loc Size, field, and a sub-TLV field;
the MTID field carries an MTID, the metric field indicates a path metric of the SRv6 locator, the algorithm field indicates a path computation algorithm used by the device, and the Loc Size field indicates a length of the SRv6 locator;
the sub-TLV comprises a first sub-TLV and/or a second sub-TLV, the first sub-TLV carries an End SID, and the End SID refers to an SID pre-allocated by the device under the SRv6 locator; and the second sub-TLV carries an Administrative Tag.

15. The electronic device of claim 12, wherein each LLDP packet further comprises an SRv6 Capability TLV structure which is to carry the SRv6 Capability.

16. The electronic device of claim 15, wherein the SRv6 Capability TLV structure comprises a value field, and the value field comprises an optional sub-TLV,
the optional sub-TLV comprises a Type field and a Length field, the Type field carries a type of a Maximum SID Stack Depth, MSD, supported by the device, the Length field carries an MSD value indicating a maximum number of SIDs allowed to be carried in a packet generated by the device.

17. A communication apparatus, applied to a first device in a network, the first device being an electronic device supporting Segment Routing, SR, over Internet Protocol Version 6, SRv6, wherein the apparatus comprises:
a locator acquiring module, to acquire an SRv6 locator of the first device;
a first packet sending module, to send a first Link Layer Discovery Protocol, LLDP, packet to a second device, wherein the first LLDP packet comprises the SRv6 locator of the first device, so that the second device generates a locator route reaching the first device based on the SRv6 locator of the first device.

18. The apparatus of claim 17, wherein the apparatus further comprises:
a packet receiving module, to receive a second LLDP packet sent from a third device, wherein the second LLDP packet comprises an SRv6 locator of the third device;
a route generating module, to generate a locator route reaching the third device based on the SRv6 locator of the third device;
a second packet sending module, to send a router advertisement message to a dynamic routing protocol neighbor of the first device based on a dynamic routing protocol, wherein the router advertisement message comprises the locator route reaching the third device.

19. The apparatus of claim 18, wherein the second LLDP packet further comprises an SRv6 Capability, and the apparatus further comprises:
a maximum Segment Identifier, SID, stack depth determining module, to determine a maximum SID stack depth supported by the third device based on the SRv6 Capability.

20. The apparatus of claim 19, wherein the first LLDP packet further comprises an SRv6 Capability, to enable the second device to determine an SRv6 Capability of the first device, wherein the SRv6 Capability of the first device indicates a maximum SID stack depth supported by the first device.

21. The apparatus of claim 18, wherein each LLDP packet comprises an SRv6 locator Type-Length-value, TLV, structure which is to carry an SRv6 locator of a device.

22. The apparatus of claim 21, wherein the SRv6 locator TLV structure comprises a value field, wherein the value field comprises a locator field, and the locator field is to carry an SRv6 locator of a device;
the value field further comprises: a Multi-Topology Identifier, MTID, field, a metric field, an algorithm field, a locator length, Loc Size, field, and a sub-TLV field;
the MTID field carries an MTID, the metric field indicates a path metric of the SRv6 locator, the algorithm field indicates a path computation algorithm used by the device, and the Loc Size field indicates a length of the SRv6 locator;
the sub-TLV comprises a first sub-TLV and/or a second sub-TLV, the first sub-TLV carries an End SID, and the End SID refers to an SID pre-allocated by the device under the SRv6 locator; and the second sub-TLV carries an Administrative Tag.

23. The apparatus of claim 20, wherein each LLDP packet further comprises an SRv6 Capability TLV structure which is to carry the SRv6 Capability TLV.

24. The apparatus of claim 23, wherein the SRv6 Capability TLV structure comprises a value field, and the value field comprises an optional sub-TLV,
the optional sub-TLV comprises a Type field and a Length field, the Type field carries a type of a Maximum SID Stack Depth, MSD, supported by a device, the Length field carries an MSD value indicating a maximum number of SIDs allowed to be carried in a packet generated by the device.

25. A machine-readable storage medium, having stored machine-executable instructions thereon that, when called and executed by a processor, cause the processor to perform the method of any one of claims 1-8.

26. A computer program product, wherein the product comprises instructions that, when executed by a processor, cause the processor to perform the method of any one of claims 1-8.
